(19) Europäisches Patentamt
European Patent Office
Office européen des brevets

(11) **EP 3 120 399 B1**

(12) **FASCICULE DE BREVET EUROPEEN**

(45) Date de publication et mention
de la délivrance du brevet:
**20.11.2019 Bulletin 2019/47**

(21) Numéro de dépôt: **15714947.7**

(22) Date de dépôt: **17.03.2015**

(51) Int Cl.:
*H01M 2/02* *(2006.01)*          *G01B 7/16* *(2006.01)*
*H01M 2/10* *(2006.01)*          *H01M 10/48* *(2006.01)*
*H01M 10/0525* *(2010.01)*

(86) Numéro de dépôt international:
**PCT/IB2015/051961**

(87) Numéro de publication internationale:
**WO 2015/140721 (24.09.2015 Gazette 2015/38)**

(54) **STRUCTURE SOUPLE AVEC JAUGE DE DEFORMATION, APPLICATION AUX ACCUMULATEURS ELECTROCHIMIQUES AU LITHIUM AVEC EMBALLAGES SOUPLES**

FLEXIBLE STRUKTUR MIT DEHNUNGSMESSSTREIFEN, ANWENDUNG FÜR ELEKTROCHEMISCHE LITHIUM-IONEN-BATTERIEN IN EINEM FLEXIBLEN GEHÄUSE

FLEXIBLE STRUCTURE WITH STRAIN GAUGE, APPLICATION TO ELECTROCHEMICAL LITHIUM-ION BATTERIES IN A FLEXIBLE PACKAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2014 FR 1452264**

(43) Date de publication de la demande:
**25.01.2017 Bulletin 2017/04**

(73) Titulaire: **Commissariat à l'Énergie Atomique et aux Énergies Alternatives 75015 Paris (FR)**

(72) Inventeurs:
• **BRUN-BUISSON, David**
  **F-38470 Vatilieu (FR)**
• **GENIES, Sylvie**
  **F-38120 Saint-Egrève (FR)**

(74) Mandataire: **Nony**
    **11 rue Saint-Georges**
    **75009 Paris (FR)**

(56) Documents cités:
DE-A1-102007 063 188      FR-A1- 2 331 775
FR-A1- 2 972 857      US-A1- 2012 286 739

EP 3 120 399 B1

**Description**

<u>Domaine technique</u>

La présente invention concerne le domaine de la mesure des déformations d'une structure souple au moyen d'au moins une jauge de déformation collée sur ladite structure.

Elle a trait plus particulièrement à une nouvelle réalisation du collage entre une jauge de déformation et la structure souple dont on cherche à déterminer les déformations qu'elle subit.

L'application principale visée par l'invention est la mesure des déformations des emballages souples d'accumulateurs électrochimiques au lithium, tels que des accumulateurs Li-ion.

L'invention concerne ainsi un accumulateur électrochimique au lithium comportant au moins une cellule électrochimique constituée d'au moins une anode et une cathode de part et d'autre d'un électrolyte, deux collecteurs de courant dont un est relié à l'anode et l'autre à la cathode, et un emballage souple agencé pour contenir la (les) cellule(s) électrochimique(s) avec étanchéité tout en étant traversé par une partie des collecteurs de courant formant les pôles.

Bien que décrite ci-après en référence à l'application principale, l'invention s'applique également à toute autre structure souple dont on cherche à mesurer les déformations qu'elle subit au moyen d'une jauge de déformation.

Par « structure souple », on entend une structure mécanique dont le(s) matériau(x) constitutif(s) est (sont) souple(s), c'est-à-dire un (des) matériau(x) apte(s) à subir des déformations sous faible contrainte; c'est-à-dire encore avec un module d'Young faible. A titre d'exemple, une structure en matériau(x) polymère(s) est considérée comme souple, lorsque son module de Young est inférieur à 10 GPa.

<u>Etat de la technique</u>

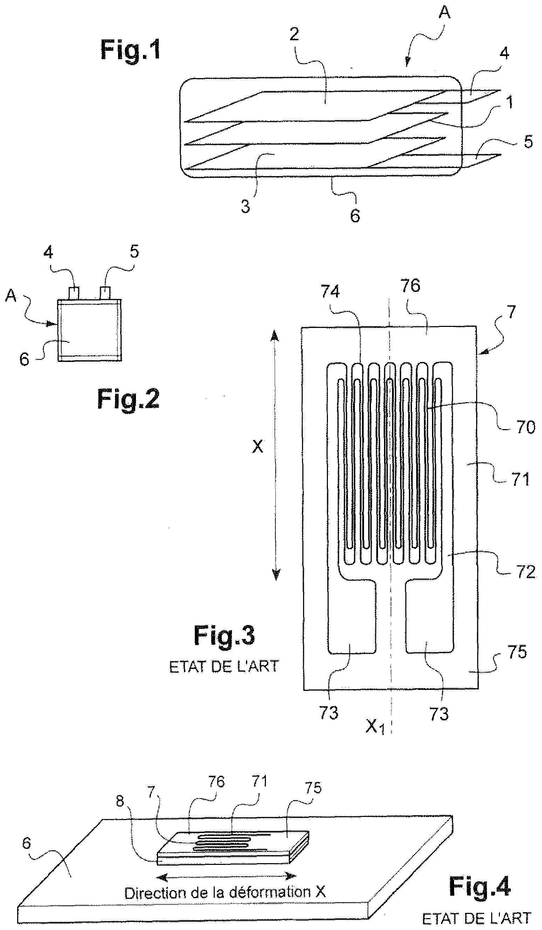

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode lors du processus de charge et inversement lors du processus de décharge, ce qui génère dans ce dernier cas le courant, par déplacement d'électrons dans le circuit extérieur. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium, comme $LiFePO_4$, $LiCoO_2$, $LiNi_{0.33}Mn_{0.33}Co_{0.33}O_2$.

L'électrode négative ou anode 3 est très souvent constituée de carbone graphite ou en $Li_4TiO_5O_{12}$ (matériau titanate), éventuellement également à base de silicium ou de composite formé à base de silicium.

Une électrode négative d'un accumulateur lithium-ion peut être formée d'un seul alliage, ou d'un mélange d'alliages, ou d'un mélange d'alliage(s) et d'autres matériau(x) d'insertion du lithium (le graphite, sous forme synthétique ou naturel, $Li_4Ti_5O_{12}$, $TiO_2$....). Cette électrode négative peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible, soit un accumulateur rigide : l'emballage est alors soit souple soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N° ADR-0N25/AL40/CPP80.

La demanderesse a également proposé dans la demande de brevet FR 2955974 un emballage souple amélioré à partir d'une ou plusieurs feuilles en polyarylethercetone (PAEK).

Les emballages rigides (boitiers) sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à $10^{-8}$ mbar.1/s, ou dans des milieux à fortes contraintes comme le domaine aéronautique ou spatial. Le matériau constitutif d'un boitier d'accumulateur Li-ion est usuellement métallique, typiquement un alliage d'aluminium ou en acier inoxydable ou en polymère rigide comme par exemple l'acrylonitrile butadiène styrène (ABS). styrène).

Au cours de l'insertion/désinsertion de l'ion Li+, les matériaux actifs des électrodes négatives et positives subissent une augmentation ou une diminution de leur maille cristallographique, tel que figuré en exemple dans le tableau ci-dessous.

| | $LiFePO_4$ | | $LiNi_{0.33}Mn_{0.33}Co_{0.33}O_2$ | | Graphite | |
|---|---|---|---|---|---|---|
| | Non lithié | Lithié | Non lithié | Lithié | Non lithié | Lithié |
| a (Å) | 5,792 | 6,008 | 2,832 | 2,858 | 2,460 | 2,485 |
| b (Å) | 9,821 | 10,334 | 2,832 | 2,858 | 2,460 | 2,485 |
| c (Å) | 4,788 | 4,683 | 13,938 | 14,223 | 3,350 | 3,706 |
| volume ($Å^3$) | 272,4 | 291,3 | 96,809 | 100,611 | 52,670 | 59,458 |
| variation de volume (%) | +6,5 | | +3,8 | | +11,4 | |

Ces modifications importantes de la maille cristallographique de l'alliage ne peuvent pas être absorbées par la porosité intrinsèque de l'électrode négative. De proche en proche étant donné que l'ensemble des constituants d'une batterie Li-ion, c'est-à-dire séparateur, électrode, collecteurs et emballage, ont une élasticité faible, l'augmentation importante des matériaux actifs induit une contrainte sur l'emballage ou une déformation de celui-ci en fonction de sa rigidité.

Autrement dit, le processus d'insertions et de désinsertions d'ions Lithium induit des gonflements/dégonflement des matériaux actifs, ce qui génère des augmentations de pression sur l'emballage de l'accumulateur en fonction de son état de charge.

De même, une dégradation d'un constituant peut générer la production de gaz au sein de l'accumulateur avec comme conséquence également des augmentations de pressions sur l'emballage.

Aussi, en réalisant une mesure de la pression sur un emballage d'accumulateur, on peut estimer l'état de santé de l'accumulateur, en fonction de son vieillissement.

Le brevet FR2331775 propose l'utilisation d'un extensomètre fixé par ses extrémités sur des structures d'avions pour la mesure de déformations. La demande FR2972857 décrit l'utilisation d'un capteur de force sur l'emballage d'un accumulateur au lithium.

La demanderesse a déjà proposé dans la demande de brevet française n° FR 13 53708 (n° de publication FR3004856) d'utiliser des jauges de déformation, en tant qu'indicateurs d'état de santé de batteries Li-ion. Dans cette demande, les pressions exercées par l'intérieur de l'accumulateur Li-ion sur l'emballage rigide (boitier), engendre sa déformation directement mesurable par une jauge de déformation collée sur le boitier, ce qui permet d'obtenir des indicateurs d'état de santé de la batterie Li-ion. Les résultats de mesure divulgués dans la demande précitée ont été obtenus avec des accumulateurs Li-ion à emballage rigide métallique sur lequel une jauge de déformation a été collée.

Les inventeurs ont constaté qu'avec les colles usuelles et les techniques classiques de collage de jauge de déformation, il n'était pas possible d'obtenir des mesures satisfaisantes sur des emballages souples d'accumulateur Li-ion.

Il existe donc un besoin d'améliorer les mesures de déformations d'un emballage souple d'accumulateur électrochimique au lithium, en vue d'obtenir un indicateur fiable de la santé de l'accumulateur.

De manière plus générale, il existe un besoin d'améliorer les mesures de déformations d'une structure souple, en s'affranchissant des limitations des colles usuelles et/ou des techniques de collage classique.

Le but de l'invention est de répondre au moins en partie à ce(s) besoin(s).

Exposé de l'invention

Pour ce faire, l'invention a pour objet, sous un de ses aspects une structure souple comprenant une jauge de contrainte de forme allongée selon un axe longitudinal X1, destinée à mesurer les déformations de la structure souple selon une direction X parallèle à l'axe X1, le support de la jauge étant collé à la structure souple uniquement par ses extrémités latérales.

Autrement dit, contrairement aux collages de jauge de déformation selon l'état de l'art qui consistent à coller toute la surface du support de jauge sur la structure, telle que sur un emballage rigide d'accumulateur Li-ion, le collage de la jauge de déformation selon l'invention consiste essentiellement à encoller uniquement les extrémités latérales du support.

Ainsi, le collage selon l'invention uniquement aux extrémités du support de jauge permet d'éviter de durcir la surface de l'emballage souple, et donc de ne pas minimiser l'atténuation du signal mesuré par la jauge de déformation. Les extrémités latérales encollées se comportent ainsi comme des mors de tractions par lesquels se répercute la force subie par la structure souple.

De préférence, chaque cordon de colle entre support de jauge et structure souple est réalisé sur toute la longueur d'une extrémité latérale, c'est-à-dire sur toute la largeur du support de jauge.

Avantageusement, la colle entre support de jauge et structure souple est une colle, à l'état durci, à module d'Young élevé, typiquement supérieur à 5 GPa, voire très élevé. Une colle avec un module d'Young très élevé par rapport à celui de la structure souple est un avantage puisque la déformation n'est pas absorbée par la colle et directement répercutée à la jauge de déformation.

Avantageusement encore, la colle est choisie parmi la famille des cyanoacrylates de formule générale: CH2=C(CN)-COOR avec R un radical méthyl, propyl, butyl, éthyl, hextyl, heptyl ou octyl.

Selon une application préférée, la structure souple constitue l'emballage souple d'un accumulateur électrochimique au lithium, tel qu'un accumulateur Li-ion.

Un accumulateur électrochimique au lithium susceptible d'être visé par l'invention comporte au moins une cellule électrochimique constituée d'au moins une anode et une cathode de part et d'autre d'un électrolyte, deux collecteurs de courant dont un est relié à l'anode et l'autre à la cathode, et un emballage souple agencé pour contenir la (les) cellule(s) électrochimique(s) avec étanchéité tout en étant traversé par une partie des collecteurs de courant formant les pôles.

En fonction du type de matériaux d'électrode d'insertion au lithium choisi pour les électrodes constitutives d'une cellule électrochimique selon l'invention, le collecteur de courant formé par au moins une feuille métallique peut être en aluminium ou métallisée en surface d'un autre métal, par exemple en aluminium superposé à du cuivre.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiM_y(XO_z)_n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi : oxyde de titane lithié ou non, par exemple $Li_4Ti_5O_{12}$ ou $TiO_2$. Plus particulièrement, le matériau d'électrode négative peut être choisi parmi les matériaux carbonés, les oxydes de titane non lithiès et leurs dérivés et les oxydes de titane lithiés tels que $Li_4Ti_5O_{12}$ et leurs dérivés et un mélange de ceux-ci.

De préférence, les anodes sont en $Li_4Ti_5O_{12}$ et les cathodes en $LiFePO_4$.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi $LiPF_6$, $LiClO_4$, $LiBF_4$ et $LiAsF_6$.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate ($CF_3SO_3$), bis (trifluorométhanesulfonate imide [($CF_3SO_2)_2N$] et tris(trifluorométhanesulfonate) méthide [($CF_3SO_2)_3C$].

Le dépôt de chaque électrode sur la portion conductrice électrique formant un collecteur de courant d'au moins un des dispositifs peut être réalisé par une technique d'enduction ou d'impression usuelle telle que sérigraphie, héliographie, flexographie, spray,....

L'invention a également pour objet selon un autre de ses aspects un procédé de collage d'une jauge de déformation sur une structure souple, selon lequel on colle le support de la jauge à la structure souple uniquement par ses extrémités latérales.

Description détaillée

D'autres avantages et caractéristiques ressortiront mieux à la lecture de la description détaillée, faite à titre illustratif en référence aux figures suivantes parmi lesquelles :

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue de dessus illustrant une jauge de déformation selon l'état de l'art,
- la figure 4 est une vue en perspective illustrant le collage d'une jauge de déformation sur un emballage rigide d'un accumulateur Li-ion selon l'état de l'art;
- la figure 5 est une vue en perspective illustrant le collage d'une jauge de déformation sur un emballage souple d'un accumulateur Li-ion selon l'invention;
- la figure 6 montre la mesure de déformation par des jauges de déformation linéaire instrumentées sur un emballage souple d'accumulateur Li-ion, respectivement selon un collage selon l'état de l'art, selon un collage conforme à l'invention au cours du temps d'un essai de traction de vitesse de déformation imposée.

Par souci de clarté, la même référence 6 est utilisée pour un emballage souple ou rigide d'un accumulateur au lithium-ion selon l'état de l'art et un emballage souple d'un accumulateur au lithium-ion selon l'invention pour toutes les figures 1 à 5.

Un accumulateur A lithium-ion selon l'invention comporte au moins une cellule électrochimique C constituée d'au moins une anode et une cathode de part et d'autre d'un électrolyte imprégné dans un séparateur. L'anode et la cathode en matériau d'insertion au Lithium et peuvent être déposées selon une technique usuelle sous la forme d'une couche active sur une feuille métallique constituant un collecteur de courant. A titre d'exemple, l'anode est en $Li_4Ti_5O_{12}$, la cathode en $LiFePO_4$ et les feuilles de collecteurs de courant en aluminium.

L'accumulateur Li-ion comporte deux collecteurs de courant dont un est relié à l'anode et l'autre à la cathode de chaque cellule C.

L'emballage souple 6 de l'accumulateur est agencé pour contenir la (les) cellule(s) électrochimique(s) avec étanchéité tout en étant traversé par une partie des collecteurs de courant formant les bornes (les pôles).

On précise que les différents éléments selon l'invention sont représentés uniquement par souci de clarté et qu'ils ne sont pas à l'échelle.

Les termes « longitudinal » et « latéral » sont à considérer en relation avec la forme géométrique allongée selon un axe longitudinal X1 de la jauge de déformation. Ainsi, les deux bords longitudinaux du support de la jauge sont ceux qui s'étendent parallèlement à l'axe X1 longitudinal. Les deux bords latéraux du support de la jauge sont ceux aux extrémités latérales et qui s'étendent orthogonalement à l'axe X1 longitudinal.

Les figures 1 et 2 ont déjà été commentées en détail en préambule. Elles ne sont donc pas décrites ci-après.

Comme représentée en figure 3, une jauge de déformation 7 a une forme allongée selon un axe longitudinal X1, et est constituée par un fil métallique très fin 70 collé sur un support 71 de faible épaisseur, typiquement en polyimide. Le fil métallique 70 est arrangé suivant une forme en boucles 74, c'est-à-dire que la majeure partie de sa longueur est distribuée parallèlement à l'axe longitudinal X1. Des brins plus gros 72 servent à souder les sorties, à des câbles de liaison aux instruments non représentés, par l'intermédiaire des plots 73, appelés plots de mesure.

Lorsqu'on désire connaître l'allongement d'une structure suivant une direction donnée X, on colle la jauge 7 avec les brins parallèles à cette direction X. La jauge 7 est qualifiée ainsi de jauge de déformation linéaire.

Ainsi, lorsqu'une déformation apparait dans la direction des déformations mesurées, la longueur du fil 70 est augmentée. Une mesure continue de la résistance du fil par une connexion électrique d'un pont de Wheatstone sur les plots de mesure 73 permet d'obtenir un signal directement proportionnel à la déformation linéaire subie par le support 71 selon l'équation:

$$R = \rho * l/S$$

dans laquelle R est la résistance de la jauge de déformation linéaire 7, p la résistivité du matériau, 1 la longueur du fil 71 et S la surface du fil 71.

On a représenté en figure 4, un collage d'une jauge de déformation linéaire 7 sur un emballage d'un accumulateur Li-ion tel qu'il est réalisé selon l'état de l'art : toute la surface inférieure du support 71 de jauge est encollée par la colle 8.

Jusqu'à présent, les colles 8 envisagées pour coller les jauges de déformation 7 sur un emballage souple sont les colles de la famille des cyanoacrylates car elles se révèlent être les liants les plus performants pour adhérer à un matériau polymère, tel que le polyimide du support 71 de jauge.

Aussi, les inventeurs ont pu analyser les raisons pour lesquelles une technique de collage selon l'état de l'art comme montré en figure 4, n'était pas performante pour mesurer les déformations d'un emballage souple d'accumulateur Li-ion.

Ainsi, les cyanoacrylates ont pour inconvénient de durcir beaucoup au séchage. Et, dans une configuration de collage selon la figure 4, la déformation subie par l'emballage souple 6 ne peut pas être mesurée totalement par la jauge 7 en raison d'une atténuation de la déformation par la colle cyanoacrylate 8 trop rigide qui est présente sur toute la surface inférieure du support 71.

Autrement dit, la différence de module d'élasticité entre la colle cyanoacrylate 8 et le(s) matériau(x) de l'emballage souple 6 est très importante et cette différence est un obstacle à une mesure de déformation performante.

Les inventeurs ont ainsi proposé une technique de collage différente de l'art antérieur, qui permet avantageusement d'utiliser des colles très rigides à l'état durci, telles que des colles cyanoacrylates.

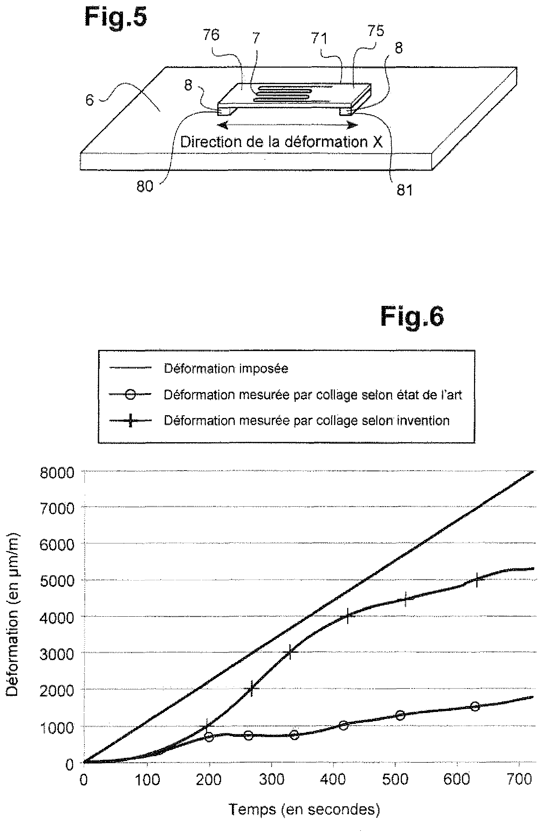

On a représenté en figure 5, un collage d'une jauge de déformation linéaire 7 sur un emballage d'un accumulateur Li-ion, selon l'invention: seules les extrémités latérales 75, 76 du support 71 de jauge sont collées sur toute leur longueur, à l'emballage souple 6 par des cordons de colle 80, 81.

Comme on peut le voir sur cette figure 5, contrairement à la technique de collage selon l'état de l'art, une majeure partie de la surface inférieure du support 71 de jauge 7, en substance la surface du support 71 sur laquelle le fil métallique 70 et les plots sont présents, est alors dépourvue de colle.

De préférence, le collage se fait sur au plus 0,5 cm de largeur de chaque extrémité latérale 75 et 76.

De préférence également, la colle 81, n'est pas en regard du fil de mesure 70 de la jauge 7.

Ainsi, l'invention consiste en un collage sur une partie seulement latérale 75, 76 du support 71 de la jauge, c'est-à-dire sur uniquement les extrémités latérales 75, 76 du support 71 qui sont transversales à l'axe X1, c'est-à-dire orthogonalement à la direction X de la déformation. Grâce à un tel collage partiel, on évite un durcissement de la surface de l'emballage souple 6 collée, et donc cela permet de ne pas minimiser l'atténuation du signal mesuré par la jauge 7. On peut assimiler le comportement mécanique des zones encollées 80, 81 à des mors de tractions par lesquels se répercute la déformation subie par l'emballage souple 6. Contrairement au collage selon l'état de l'art, un module d'Young très élevé de la colle 80, 81 par rapport à l'emballage souple 6 est un avantage puisque la déformation n'est pas absorbée par la colle et directement répercutée à la jauge 7.

Afin de valider l'amélioration de la mesure apportée par le collage selon l'invention, les inventeurs ont procédé à des essais comparatifs.

Ces essais sont des essais de traction qui ont été réalisés sur deux bandes rectangulaires d'emballage souple de batterie Li-ion, de dimensions identiques à savoir une largeur de 2 cm et une longueur de 20 cm. L'emballage souple utilisé pour les bandes est un matériau tri-couches : une couche de polyamide, une couche d'aluminium et une couche de polyéthylène.

Chacune des deux bandes a été instrumentée avec une jauge de déformation linéaire 7 comme représentée en figure 3.

Plus précisément :

- une jauge de déformation 7 a été collée sur une des deux bandes comme selon l'état de l'art, i.e. comme montré en figure 4, avec toute la surface du support 71 collée sur l'emballage souple 6 ;
- une jauge de déformation 7 a été collée sur l'autre des deux bandes comme selon l'invention, i.e. comme montré en figure 5, avec uniquement les extrémités latérales 75, 76 du support 1 collées à l'emballage souple 6.

On a alors procédé à des essais de traction sur les deux bandes ainsi instrumentées.

Les mesures de déformation en fonction du temps de l'essai de traction sont représentées sur la figure 6 sous la forme de courbes parmi lesquelles :

- la courbe en traits pleins représente la déformation à vitesse constante imposée par le banc de traction ;
- la courbe en traits pleins symbolisée avec des ronds correspond au signal mesuré par la jauge collée selon une technique de l'état de l'art ;
- la courbe en traits pleins symbolisée avec des croix correspond au signal mesuré par la jauge collée selon une technique conforme à l'invention.

De ces courbes, il ressort que le collage selon l'invention améliore d'un facteur sensiblement égal à trois, la sensibilité d'une jauge de déformation.

L'invention n'est pas limitée aux exemples qui viennent d'être décrits ; on peut notamment combiner entre elles des caractéristiques des exemples illustrés au sein de variantes non illustrées.

## Revendications

1. Structure souple (6), constituant l'emballage souple d'un accumulateur électrochimique au lithium, tel qu'un accumulateur Li-ion, comprenant une jauge de contrainte (7) de forme allongée selon un axe longitudinal X1, destinée à mesurer les déformations de la structure souple selon une direction X parallèle à l'axe X1, le support (71) de la jauge étant collé à la structure souple uniquement par ses extrémités latérales (75, 76).

2. Structure souple (6) selon la revendication 1, chaque cordon de colle (80, 81) entre support de jauge (71) et structure souple étant réalisé sur toute la longueur d'une extrémité latérale.

3. Structure souple selon la revendication 1 ou 2, la colle entre support de jauge et structure souple étant une colle, à l'état durci, à module d'Young élevé, typiquement supérieur à 5 GPa.

4. Structure souple selon l'une des revendications précédentes, la colle étant choisie parmi la famille des cyanoacrylates de formule générale: $CH_2=C(CN)-COOR$ avec R un radical méthyl, propyl, butyl, éthyl, hextyl, heptyl ou octyl.

5. Procédé de collage d'une jauge de déformation (7) sur une structure souple (6) selon la revendication 1, selon lequel on colle le support (71) de la jauge à la structure souple uniquement par ses extrémités latérales (75, 76).

## Patentansprüche

1. Flexible Struktur (6), welche die flexible Verpackung eines elektrochemischen Lithium-Akkumulators wie eines Li-Ionen-Akkumulators bildet, umfassend einen Dehnungsmessstreifen (7) von länglicher Form entlang einer Längsachse X1, der dazu bestimmt ist, die Verformungen der flexiblen Struktur entlang einer Richtung X parallel zur Achse X1 zu messen, wobei der Träger (71) des Messstreifens nur an seinen seitlichen Enden (75, 76) an die flexible Struktur geklebt ist.

2. Flexible Struktur (6) nach Anspruch 1, wobei jede Klebstoffraupe (80, 81) zwischen Messstreifenträger (71) und flexibler Struktur über die gesamte Länge eines seitlichen Endes ausgeführt ist.

3. Flexible Struktur nach Anspruch 1 oder 2, wobei der Klebstoff zwischen Messstreifenträger und flexibler Struktur ein Klebstoff mit hohem Young 'schen Modul im ausgehärteten Zustand von typischerweise mehr als 5 GPa ist.

4. Struktur nach einem der vorhergehenden Ansprüche, wobei der Klebstoff aus der Familie der Cyanoacrylsäureester mit der folgenden Grundformel gewählt ist: $CH2=C(CN)-COOR$, wobei R ein Methyl-, Propyl-, Butyl-, Ethyl-, Hexyl-, Heptyl- oder Octylradikal ist.

5. Verfahren zum Kleben eines Dehnungsmessstreifens (7) auf eine flexible Struktur (6) nach Anspruch 1, bei dem der Träger (71) des Messstreifens nur an seinen seitlichen Enden (75, 76) an die flexible Struktur geklebt wird.

**Claims**

1. A flexible structure (6), constituting the flexible packaging of a lithium electrochemical accumulator such as a Li-ion accumulator, comprising a strain gauge (7) that is elongate along a longitudinal axis X1 and that is intended to measure deformation of the flexible structure in a direction X parallel to the axis X1, the carrier (71) of the gauge being adhesively bonded to the flexible structure only by its lateral ends (75, 76).

2. The flexible structure (6) as claimed in claim 1, each adhesive bead (80, 81) between the gauge carrier (71) and flexible structure being produced over the entire length of one lateral end.

3. The flexible structure as claimed in claim 1 or 2, the adhesive between the gauge carrier and flexible structure being an adhesive, in the set state, having a high Young's modulus, typically higher than 5 GPa, or even a very high Young's modulus.

4. The flexible structure as claimed in one of the preceding claims, the adhesive being chosen from the family of cyanoacrylates of general formula: $CH_2=C(CN)-COOR$, where R is a methyl, propyl, butyl, ethyl, hextyl, heptyl or octyl radical.

5. A method for adhesively bonding a strain gauge (7) to a flexible structure (6) according to claim 1, wherein the carrier (71) of the gauge is adhesively bonded to the flexible structure only by its lateral ends (75, 76).

# Fig.1

# Fig.2

# Fig.3

ETAT DE L'ART

X

X₁

# Fig.4

ETAT DE L'ART

Direction de la déformation X

## Fig.5

Direction de la déformation X

## Fig.6

——————— Déformation imposée

—⊖— Déformation mesurée par collage selon état de l'art

—+— Déformation mesurée par collage selon invention

## RÉFÉRENCES CITÉES DANS LA DESCRIPTION

**Documents brevets cités dans la description**

- US 20060121348 A
- US 7348098 B
- US 7338733 B
- US 2008060189 A
- US 20080057392 A
- US 7335448 B
- FR 2955974
- FR 2331775
- FR 2972857
- FR 1353708
- FR 3004856